Europäisches Patentamt

(19) European Patent Office

Office européen des brevets

(11) Publication number: **0 023 799**
**B1**

(12) **EUROPEAN PATENT SPECIFICATION**

(45) Date of publication of patent specification: **27.04.83**

(21) Application number: **80302510.5**

(22) Date of filing: **23.07.80**

(51) Int. Cl.³: **A 23 L 1/164,**
**A 23 L 1/214, A 23 L 1/18,**
**A 23 L 1/216**

(54) **Preparing a vapour-burst food.**

(30) Priority: **03.08.79 US 63243**

(43) Date of publication of application:
**11.02.81 Bulletin 81/6**

(45) Publication of the grant of the patent:
**27.04.83 Bulletin 83/17**

(84) Designated Contracting States:
**CH DE FR GB IT LI NL SE**

(56) References cited:
**DE - B - 1 933 393**
**US - A - 3 076 711**
**US - A - 3 519 439**
**US - A - 3 692 537**

(73) Proprietor: **Allison, George Everett**
**Suite 220 1101 New Hampshire Avenue, N.W.**
**Washington, D.C. 20037 (US)**

(72) Inventor: **Allison, George Everett**
**Suite 220 1101 New Hampshire Avenue, N.W.**
**Washington, D.C. 20037 (US)**

(74) Representative: **Eyles, Christopher Thomas et al,**
**BATCHELLOR, KIRK & EYLES 2 Pear Tree Court**
**Farringdon Road**
**London, EC1R 0DS (GB)**

Courier Press, Leamington Spa, England.

Preparing a vapour-burst food

This invention is directed to a process of providing foods, more particularly crispy, snack-like foods and similar convenience foods.

A number of crispy, fat-fried food products have been developed as snack foods. However, these fat-fried products normally contain significant amounts of fat. For example, potato chips can have a fat content as high as 40%. Foods containing a large amount of fat require careful storage and the use of anti-oxidants to avoid having the product turn rancid upon contact with the atmosphere. In addition, a large amount of fat is a detriment in that it contributes a large amount of calories and diet-conscious people tend to avoid the use of such high calorie-containing materials.

US—A—2,863,770 describes a food product derived from edible tubers, such as potatoes, which is extruded under pressure and fried to give a crisp expanded product having the taste and aroma of a fried potato product, such as potato chips. More specifically, a preswelled potato flour containing between 30 and 40% water is extruded into strands. The strands are dried to a moisture content of between 6 and 10%. The dried strands are cut into piecelets, and the piecelets are fried in hot fat.

The frying expands the piecelets to about five times their original volume. US—A—3,076,711 and 3,131,063 are directed to related processes.

In US—A—3,692,537 there is described a method of producing an expanded fried potato product from potato flour in which the sugar content and the water-binding property can be simply and uniformly controlled. However, the resulting product is still a fat-fried product having the disadvantages discussed above.

The invention seeks to provide an improved process for the production of an expanded foodstuff. It also seeks to provide a novel process for the production of an expanded foodstuff that is not fat-fried. Further, this invention seeks to produce a new and wide variety of low-cost food that will be nutritious, filling and delicious, will come in attractive flavours and colours, and will be easy, quick, and fun to prepare.

According to the present invention there is provided a process for preparing a food in which a suitable expandable mixture of food is heated in a confined space to generate an elevated pressure followed by sudden release of the elevated pressure, characterised in that a suitable expandable mixture of food (8) substantially filling a sealed confining means (1, 3) having a line of rupture (4) along which the confining means will rupture upon increase of internal pressure therein is heated at a sufficient temperature and for a sufficient length of time to cause the mixture to expand sufficiently to cause the confining means (1, 3) to rupture along the line of rupture (4) to permit the expandable mixture to suddenly expand through the ruptured section.

The invention further provides an apparatus for preparing vapour-burst fast food characterised in that it comprises a sealed confining means (1, 3) having a line of rupture (4) along which the confining means will rupture upon increase of internal pressure therein the confining means (1, 3) being substantially filled by a suitable expandable mixture of food (8), said confining means (1, 3) being capable of rupturing in predetermined manner upon heating the confining means so as to cause the expandable mixture to expand and develop sufficient internal pressure within the confining means (1, 3) to cause the confining means (1, 3) to rupture along the line of rupture (4) to permit the expandable mixture to suddenly expand through the ruptured section.

The invention is thus directed to a process of providing crispy, snack-like foods that are not fat-fried. The basic principle of operation is not unlike that of heating corn kernels to produce popcorn as described for example in US—A—3,519,439. In the case of popcorn, sufficient energy is added (by means of, for example, heated oil or hot air) to somewhat moist edible material contained within a hard, strong natural skin to raise the interior temperature and vapour pressure. Then the vapour pressure exceeds the tensile strength of the kernel skin, the skin bursts, yielding expanded "popcorn" food.

According to the process of the invention, a suitable mixture of moist edible ingredients contained in a confining means is caused to undergo sudden expansion by adding to the mixture sufficient energy to cause the ingredients to rupture, and to burst from, the confining means when a bursting pressure is achieved.

The mixture of ingredients can be chosen from the many food bases known to the art. Useful mixtures include the flours derived from edible tubers and having present all of the flavour characteristics of the edible tuber, such as the albumen, minerals, fibrous material and flavour characteristics of, for example, the potato. It is preferable to use a starch-containing flour, such as one derived from potatoes, rice, corn, tapioca, and the like.

The mixture of ingredients will be moist and will contain from about 5 to about 50% by weight of water, preferably about 10 to about 30% by weight.

The most preferred mixtures of ingredients are soy flour, whole-grain wheat flour, and whole-grain rice flour or whole-grain corn-meal with non-fat milk, a vegetable oil, and modest amounts of protein enhancers such as beaten eggs, seafood, fowl, strips of lean meat, or the like. In addition, flavour enhancers such as, for example, an extract such as almond extract, or condiments such as, for example, curry, may be added. Liquor or liquor flavourants may also be added. Colour enhancement may be achieved with natural or certified food colourings.

Nutritional or flavour enhancement may be achieved by adding vegetables, fruits or nuts, in small pieces or in crushed or blended form. As a further nutritional enhancement, yeast may be added to the mixtures of ingredients. If live yeast and a small amount of raw sugar are used, the internal pressure in the confining means will rise after sealing. Therefore, the resulting end product will have both greater nutritional value and greater expansion due to the additional pressure than would be achieved without the live yeast.

The mixture of ingredients is inserted or injected into and then heated in confining means which are manufactured for this purpose or are otherwise not naturally intended to be used in this manner. The confining means can be edible or inedible and can be comprised of, for example, a metal, preferably aluminium, ceramic material, or thermosettable polymer material, that has an initial yield point of about 650°F (about 345°C) or higher. In addition, the confining means can be comprised of protein containing, naturally occurring or manufactured, substances such as bread crust, nut or fruit shell material, or the like. The confining means will preferably have a parting line or seam where two or more edges have been joined by a frangible material or points of weakness resulting from, for example, scoring.

The ingredients in their sealed confining means may be stored in frozen, refrigerated, or room temperature environments, dependent on the storage qualities of the ingredients chosen.

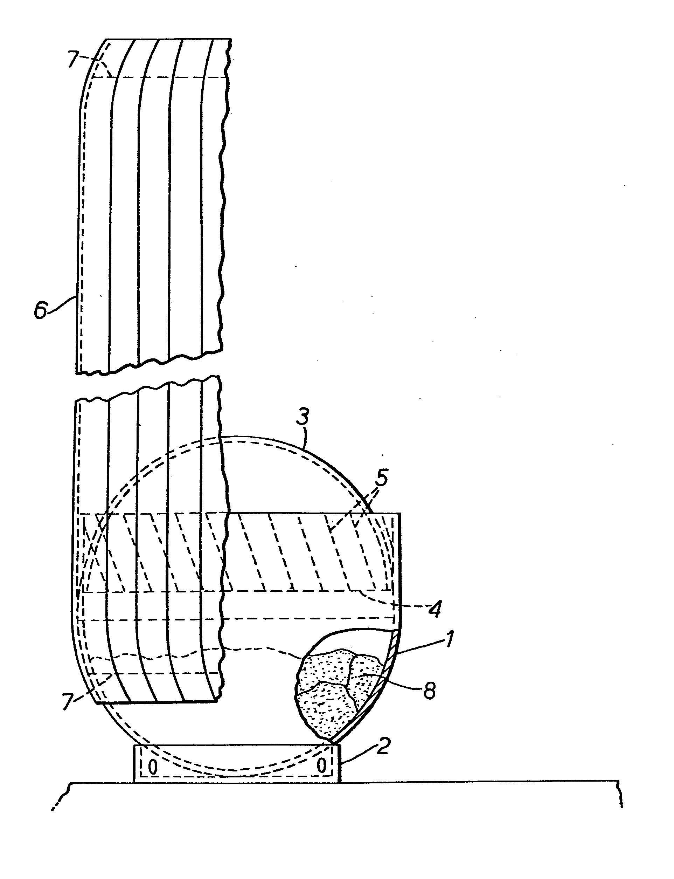

In order that the invention may be clearly understood and readily carried into effect, a preferred embodiment thereof will now be described, by way of example only, with reference to the accompanying drawing which shows one form of confining means according to the invention, including a sectional aspect of a receiving means.

In the drawing which represents one embodiment of this invention, a lower portion 1 of the confining means is attached to a base 2 so the confining means may rest on a flat surface, such as the bottom of an oven. A reciprocally fitting upper portion of the confining means 3 abuts lower portion 1 at the joint or parting line 4, and the two portions 1 and 3 are joined together by frangible sealing material 5, which may extend somewhat above parting line 4.

Suitable mixed ingredients 8 are contained within the sealed confining means. When the confining means is heated, the vapour pressures of water vapour and other gases from the heated ingredients 8 increase until the seal 5 ruptures or bursts at line 4, upper portion 3 separates from lower portion 1, and the mixed ingredients 8 suddenly expand away from lower portion 1.

The expanded mixed ingredients may be sufficiently self-cohesive that the expanded mixed ingredients will be a one-piece product. However, the expanded product may be insufficiently self-cohesive or particulate.

The confining means may optionally have a receiving means or canopy 6 attached to the lower portion 1 by either chemical or mechanical means. The receiving means may comprise a pleated, expandable means that encompasses the circumference of lower portion 1. Mechanical fastening or adhesive applied to the pleats in bands 7 at the top and bottom of the receiving means 6 provides for circular shape.

In another embodiment of the invention, the confining means, i.e. portions 1 and 3, may be surrounded by, or contained in, a receiving means 6. For example, the receiving means 6 may comprise a collapsed or otherwise evacuated expandable means. In a further embodiment of the invention, the receiving means 6 comprises a rubber, bag-like means from which air has been removed and which is large enough to permit expansion of the expandable mixed ingredients.

The receiving means 6 may be comprised of edible or inedible material. Edible material would include, for example, bread or pastry crust and the like. Inedible materials would include, for example, metals, ceramic materials, or polymeric materials.

The frangible sealing material 5 can be any suitable, non-toxic material that will join the lower and upper portions of the confining means and will burst when the mixed ingredients are sufficiently heated. Suitable sealing materials include polymeric materials that will begin to yield at about 455°F (about 250°C) or higher. An example of such a sealing material is an anaerobic polymer material known as "Loctite"® (available from Loctite Corporation, Newington, Connecticut). However, when "Loctite"® is used, an annular rubber seal should preferably be placed between the mixture of ingredients and the "Loctite"®.

In addition, sealing may be effected in a two-stage manner. The lower and upper portions of the confining means may be joined by an epoxy material and then a more temperature-resistant material such as a silicone or poly-silicone material may be applied on top of the epoxy material.

Further, mechanical means can be used to augment the sealing strength. If, for example, the confining means is comprised of a metal, the upper edge of the metal can be bent or deformed inwardly. More specifically, the upper edge may contain castellations which may then be bent inwardly to frangibly strengthen the sealing means.

The frangible sealing material will extend from about 0.25 to 1.0 inches 6.35 to 24.4 mm) above the parting line.

The energy provided can be focused or unfocused coherent or incoherent, pulsed or continuous wave, radiant energy or flow of electric current. The energy source can be within the confining means and can be chemical in nature, for example, fuel and oxidizer in one molecular form or in separate molecular forms. An example of the latter is $H_2$ plus $O_2$. Combustion could be initiated by any of many ways, such as by a hot current carrying wire. Energy cost can be kept low by using energy focused on ingredients or by using an energy source within the strong containing means. The expanded food product can be prepared very quickly by using an internal fuel and oxidizer.

The confining means can be structured so that the opening resulting from the bursting action will have a particular shape and will in turn impart a particular shape to the expanded ingredients which will pass through the opening.

A preferred method of imparting energy to the confining means is to heat the confining means either in an oven or on a heated surface, such as a hot plate, for a period of, for example, at least about 1 second to about 20 seconds or more at a temperature of, for example, from about 250°F to about 450°F (about 120°C to about 235°C).

The ingredients for the mixture of ingredients ·can be chosen according to the properties to be imparted to the end product and according to the desired time to bursting. For example, various colours, flavours, and textures can be imparted. The ingredients may also be chosen so that the final product will have an expansion ratio of from about 1.5:1 to about 50:1, preferably from about 2:1 to 10:1.

The ingredients may also comprise food supplements, such as protein additives, or medicinal components, such as those intended to assist in gaining or losing weight. Careful choosing of ingredients in combination with the dehiscent means of this invention will satisfy hunger using a modest volume of ingredients.

In the event that the products of this invention are intended to be used in microwave ovens, or similar such heating systems, the confining means, receiving means, etc., should be comprised of materials compatible with such use, i.e. they should not be comprised of materials that would reflect the microwave radiation. For example, aluminium or other metallic materials should not be used.

The invention described above is directed primarily to a product that will burst when the internal pressure is sufficient to cause the ingredients to burst from the confining means. It is also within the scope of this invention that during heating the confining means might, in certain applications, be scored by mechanical or chemical means to cause bursting at a particular time or temperature. Such bursting could be effected by, for example, a short burst of a laser beam. Such controlled bursting could be effected in a certain shape to cause the expanded contents to have a particular shape or configuration.

In addition to the configuration of the confining means depicted in the drawing, the confining means can also comprise a clam-shell type arrangement whereby two portions of the confining means are attached on one edge, or a portion of an edge, and the remainder of the abutting surfaces are sealed.

Examples

The following examples are intended to illustrate the invention and are not intended to limit the invention thereto.

Example 1

A composition known as Beignet Mix (commercially available from Cafe du Monde, New Orleans, La.) which consists of flour, dry milk solids, sugar, vegetable shortening, salt, dried egg whites, leavening and vanilla, was used. The ingredients were stirred with ice water to make a runny mix. The confining means comprised two reciprocally fitting pieces of aluminium, each having a wooden nozzle insert, and an aluminium foil expandable receiving means was affixed to the outer portion of the confining means. The confining means was rinsed with avocado oil and then each reciprocally fitting piece was filled with runny mix.

The complete sample was kept chilled at 40°F (4°C) for several hours and then placed in an oven preheated to 525°F (275°C). Bursting occurred in about four minutes.

The resulting expanded material had a volume of about 1.7 times that of the original ingredients, as measured by comparing exterior measurements. Part of the expanded food had a swirl shape and the other part had a corkscrew shape.

Self-adhesiveness was highly satisfactory. The food could be picked up and eaten. Countless non-connected small bubbles and voids were visible to the unaided eye and helped to provide a pleasing texture for eating. The expanded food had an ivory colour and a vanilla flavour.

Example 2

A mixture of ingredients as in Example 1 was used, with the exception that a small amount, about two drops for 4 oz. (113 g) of mixture, of red food colouring was added to yield a pink runny mix. The lower portion, or piece, of the confining means was fitted with a nozzle having two canted grooves.

A filled container was chilled as above and then placed in an oven preheated to about 525°F (275°C). Bursting occurred in about nine minutes. The longer period of time, as compared to Example 1, was believed due to the fact that the aluminium confining means used in this Example had a double aluminium canopy which acted as a partial heat barrier.

The expanded food product had a swirl shape and approximately the same expansion ratio as the product of Example 1.

Example 3

Three bases were glued to three tube sections using cyanoacrylate ester glue known as "Super Glue 3"®. The bases were comprised of aluminium and had a square shape approximately 13 mm. square. The tube sections, also comprised of aluminium, were 10 mm. high and had an inside diameter of 6 mm. The first sample was filled entirely, i.e., no air gap, with a mixture comprised of corn starch, distilled water and red food colouring. The second sample was filled with a mixture comprised of corn starch, distilled water, green food colouring, and liquid peppermint flavouring. The third sample was filled with a mixture comprised of whole wheat flour, sugar, distilled water, and a coffee liqueur known as Kahlua Liqueur. The second and third samples each contained a 0.2 mm. air gap at the top of the tube.

In each sample a saucer-shaped top was glued to the top of the tube section using a cyanoacrylate ester glue known as "Krazy Glue"®. The tops were comprised of one layer of aluminium foil and a top layer consisting of two strips of foil separated by a gap of about 0.6 to 1.2 mm. The two layers were glued together.

The three samples were heated in an electric popcorn popper containing 3 tablespoons of Safflower oil. In all three cases, the tube section parted from the base in about 5 to 7 seconds.

The expanded contents of Sample 1 were about 2.1 times the original volume, the expanded contents of Sample 2 were about 2 times the original volume, and the expanded contents of Sample 3 were about 1.1 times the original volume, as determined by comparing external measurements.

## Claims

1. A process for preparing a food in which a suitable expandable mixture of food is heated in a confined space to generate an elevated pressure followed by sudden release of the elevated pressure, characterised in that a suitable expandable mixture of food (8) substantially filling a sealed confining means (1, 3) having a line of rupture (4) along which the confining means will rupture upon increase of internal pressure therein is heated at a sufficient temperature and for a sufficient length of time to cause the mixture to expand sufficiently to cause the confining means (1, 3) to rupture along the line of rupture (4) to permit the expandable mixture to suddenly expand through the ruptured section.

2. The process of claim 1 wherein the suitable expandable mixture contains water and starch.

3. The process of claim 1 or claim 2 wherein the confining means is heated for from 1 to 20 seconds at from 250°F to 450°F (120°C to 235°C).

4. An apparatus for preparing vapour-burst fast food characterised in that it comprises a sealed confining means (1, 3) having a line of rupture (4) along which the confining means will rupture upon increase of internal pressure therein the confining means (1, 3) being substantially filled by a suitable expandable mixture of food (8), said confining means (1, 3) being capable of rupturing in predetermined manner upon heating the confining means so as to cause the expandable mixture to expand and develop sufficient internal pressure within the confining means (1, 3) to cause the confining means (1, 3) to rupture along the line of rupture (4) to permit the expandable mixture to suddenly expand through the ruptured section.

5. The apparatus of claim 4 wherein the confining means is comprised of polymeric material, metal or ceramic.

6. A foodstuff package characterised in that it is substantially filled by an expandable mixture of food (8) that, upon heating in a confined space, is capable of developing an elevated pressure, contained within a sealed confining means (1, 3) that is adapted to rupture in predetermined manner along a line of rupture (4) upon heating the package to develop a suitable elevated bursting pressure within the confining means (1, 3), whereby the expandable mixture suddenly expands through the ruptured section.

## Patentansprüche

1. Verfahren zur Herstellung eines Nahrungsmittels, bei dem man ein geeignetes expandierbares Nahrungsmittelgemisch in einem abgesperrten Raum zur Erzeugung eines erhöhten Druckes erhitzt und nachfolgend den erhöhten Druck plötzlich entspannt, dadurch gekennzeichnet, daß man ein geeignetes expandierbares Nahrungsmittelgemisch (8), das ein abgedichtetes, eine Reißlinie (4) aufweisendes, beim Anstieg des Innendruckes längs der Reißlinie reißendes Absperrmittel (1, 3) im wesentlichen ausfüllt, genügend lange auf eine ausreichende Temperatur erhitzt, so daß das Gemisch genügend expandiert, das Absperrmittel (1, 3) längs der Reißlinie (4) reißt und das expandierbare Gemisch durch den gerissenen Querschnitt plötzlich expandiert.

2. Verfahren nach Anspruch 1, bei dem das geeignete expandierbare Gemisch Wasser und Stärke enthält.

3. Verfahren nach Anspruch 1 oder 2, bei dem man das Absperrmittel 1 bis 20 Sekunden auf 250 bis 450°F (120 bis 235°C) erhitzt.

4. Vorrichtung zur Herstellung von durch Dampf aufgebrochenen Schnell-Nahrungsmitteln, dadurch gekennzeichnet, daß sie ein abgebichtetes, eine Reißlinie (4) aufweisendes, beim Anstieg des Innendruckes längs der Reißlinie reißendes, mit einem geeigneten expandierbaren Nahrungsmittelgemisch (8) im wesentlichen gefülltes Absperrmittel (1, 3) umfaßt, das bei Erhitzung in vorbestimmter Weise aufreißen kann, so daß das expandierbare Gemisch veranlaßt wird, zu expandieren und in dem Absperrmittel (1, 3) einen ausreichenden Innendruck zu entwickeln, so daß das Absperrmittel (1, 3) längs der Reißlinie (4) reißt und das expandierbare Gemisch durch den gerissenen Querschnitt expandieren kann.

5. Vorrichtung nach Anspruch 4, bei der das Absperrmittel einen Polymerwerkstoff, Metall oder Keramik aufweist.

6. Nahrungsmittel-Packung, dadurch gekennzeichnet, daß sie mit einem expandierbaren Nahrungsmittelgemisch (8), das bei Erhitzung in einem abgesperrten Raum einen Überdruck entwickelt, im wesentlichen gefüllt ist und das Nahrungsmittelgemisch in einem abgedichteten Absperrmittel (1, 3) enthalten ist, das bei Erhitzung der Packung zwecks Entwicklung eines geeigneten erhöhten Berstdruckes in dem Absperrmittel (1, 3) in vorbestimmter Weise längs einer Reißlinie (4) reißen kann, wodurch das expandierbare Gemisch plötzlich durch den gerissenen Querschnitt expandiert.

**Revendications**

1. Procédé pour préparer un aliment dans lequel on chauffe un mélange alimentaire expansible dans un espace confiné pour engendrer une pression élevée qui est ensuite brusquement supprimée, caractérisé en ce qu'on chauffe un mélange alimentaire expansible (8) remplissant pratiquement des moyens de confinement hermétiques (1, 3) ayant une ligne de rupture (4) le long de laquelle lesdits moyens de confinement se rompent lorsque la pression interne augmente, à une température suffisante et pendant une période de temps suffisamment longue, pour produire une expansion suffisante dudit mélange pour provoquer la rupture desdits moyens de confinement (1, 3) le long de la ligne de rupture (4) ain de permettre aux mélanges expansibles de se dilater soudainement par la section rompue.

2. Procédé selon la revendication 1, caractérisé en ce que le mélange expansible approprié contient de l'eau et de l'amidon.

3. Procédé selon la revendication 1 ou 2, caractérisé en ce qu'on chauffe les moyens de confinement pendant une à 20 secondes à une température de 120°C à 235°C.

4. Appareil pour préparer en quelques instants des produits alimentaires, caractérisé en ce qu'il comprend des moyens de confinement hermétiques (1, 3) ayant une ligne de rupture (4) le long de laquelle ceux-ci se rompent lorsque leur pression interne augmente, lesdits moyens de confinement (1, 3) étant pratiquement remplis avec un mélange alimentaire expansible approprié (8), lesdits moyens de confinement (1, 3) étant capables de se rompre d'une manière prédéterminée lorsqu'on les chauffe, de façon à provoquer l'expansion du mélange expansible et pour développer une pression interne suffisante dans ceux-ci pour que lesdits moyens de confinement se rompent le long de la ligne de rupture (4) en permettant aux mélanges expansibles de se dilater soudainement à travers la section rompue.

5. Appareil selon la revendication 4, caractérisé en ce que les moyens de confinement comprennent une matière polymétrique, un métal ou une céramique.

6. Emballage de produit alimentaire, caractérisé en ce qu'il est pratiquement rempli avec un mélange alimentaire expansible (8) qui, après qu'il a été chauffé dans un espace confiné, est capable de développer une pression élevée, contenu dans des moyens de confinement hermétiques (1, 3) qui sont adaptés à se rompre d'une manière prédéterminée le long d'une ligne de rupture (4) quand on chauffe l'emballage pour développer une pression d'éclatement élevée appropriée à l'intérieur des moyens de confinement (1, 3) ce qui fait que le mélange expansible se dilate soudainement à travers la section rompue.